# EUROPÄISCHE PATENTSCHRIFT

(11) **EP 3 918 167 B1**
(45) Veröffentlichungstag und Bekanntmachung des Hinweises auf die Patenterteilung: **06.03.2024**
(21) Anmeldenummer: 20705134.3
(22) Anmeldetag: 27.01.2020
(51) Int. Cl.: E05F 15/603, H02K 21/22, H02K 7/116, H02K 7/14

(54) **MÖBELKOMPONENTE MIT EINEM ANTREIBBAREN MÖBELBESCHLAG**
FURNITURE COMPONENT COMPRISING A DRIVABLE FURNITURE FITTING
COMPOSANT DE MEUBLE DOTÉ D'UNE FERRURE DE MEUBLE POUVANT ÊTRE ACTIONNÉE

(30) Priorität: 28.01.2019 DE 102019102050
(43) Veröffentlichungstag der Anmeldung: 08.12.2021
(73) Patentinhaber: ambigence GmbH & Co. KG, 32052 Herford (DE)
(72) Erfinder: GÖTZ, Gerhard, 32257 Bünde (DE); ANDSCHUS, Stefan, 32312 Lübbecke (DE); SCHAEL, Oliver, 32278 Kirchlengern (DE)
(74) Vertreter: BSB Patentanwälte Schütte & Engelen Partnerschaft mbB
(86) Internationale Anmeldenummer: PCT/EP2020/051891
(87) Internationale Veröffentlichungsnummer: WO 2020/156984

(56) Entgegenhaltungen:
- DE-U1-202009 015 640
- DE-U1-202014 104 749

## Beschreibung

Die vorliegende Erfindung betrifft eine Möbelkomponente mit einem antreibbaren Möbelbeschlag und mit einem elektrischen Motor zur beweglichen Verbindung zweier Möbelteile, wobei der Möbelbeschlag an einem ersten Möbelteil anordenbar oder befestigbar ist und dafür vorgesehen ist, mit dem Motor das Möbelteil anzutreiben, um eine motorunterstützte Bewegung eines Möbelteils relativ zu dem anderen Möbelteil zu erzeugen.

Die DE 20 2009 015 640 U1 offenbart eine Antriebseinheit für einen verfahrbaren Schiebeflügel mit einem Antriebsmotor und einem damit gekoppelten Getriebe, dessen Abtriebsglied mit einer Laufrolle drehfest verbunden und in eine ortsfeste Führungsschiene des Schiebeflügels eingreift. Der Antriebsmotor ist ein bürstenbehafteter oder bürstenloser DC-Außen- oder Innenläufermotor oder ein Scheibenläufermotor.

Mit der DE 20 2014 104 749 U1 ist ein Elektromotor für einen Kühlschrank oder Tiefkühlschrank bekannt geworden, um die Tür motorisch gesteuert zu öffnen oder zu schließen. Der Elektromotor weist einen Stator, einen Rotor und ein rotierbar angeordnetes erstes Maschinenelement zur Betätigung eines zweiten Maschinenelements auf und der Elektromotor umfasst eine Statoraufnahmeeinheit zur Aufnahme des Stators und eine Rotoraufnahmeeinheit zur Aufnahme des Rotors.

Im Stand der Technik sind verschiedene Möbel bekannt geworden, bei denen gegebenenfalls auch ein Teil durch einen elektrischen Motor bewegt werden kann.

So zeigt die WO 2009/114883 A2 einen Möbelantrieb zum Antreiben eines bewegbaren Möbelteils mit einem Elektromotor zwischen zwei Endanschlägen. Grundsätzlich funktioniert ein solcher Möbelantrieb und erlaubt das motorisch gesteuerte Öffnen und Schließen eines bewegbaren Möbelteils. Nachteilig ist aber der nicht unerhebliche Platzbedarf, da dem Elektromotor ein Getriebe mit mehreren Getriebestufen nachgeordnet ist, um die hohe Drehzahl eines solchen Elektromotors auf ein im Möbelbereich zum Öffnen und Schließen vernünftiges Geschwindigkeitsmaß herabzusetzen.

Ein weiterer Nachteil ist bei derartigen Konstruktionen meist ein relativ unangenehmes Geräusch, welches durch die hohe Drehzahl des Elektromotors erzeugt wird. Insgesamt ist deshalb ein derartiger Möbelantrieb aufgrund der vielen verschiedenen Komponenten aufwendig und somit teuer und reduziert beispielsweise im Innenraum eines Oberschrankes den zur Verfügung stehenden Platz nicht unbeträchtlich. Auch die Einbringung von Innenorganisationseinrichtungen wird dadurch erschwert. Schließlich stört gegebenenfalls auch das erzeugte Geräusch, welches nur durch eine relativ aufwendige Dämmung oder teure Komponenten reduzierbar ist.

Es ist deshalb die Aufgabe der vorliegenden Erfindung, eine Möbelkomponente mit einem antreibbaren Möbelbeschlag zur beweglichen Verbindung zweier Möbel zur Verfügung zu stellen, welche einen geringeren Bauraum benötigt.

Diese Aufgabe wird durch eine Möbelkomponente mit einem antreibbaren Möbelbeschlag zur beweglichen Verbindung zweier Möbelteile mit den Merkmalen des Anspruchs 1 gelöst. Bevorzugte Weiterbildungen der Erfindung sind Gegenstand der Unteransprüche. Weitere Vorteile und Merkmale der vorliegenden Erfindung ergeben sich aus der allgemeinen Beschreibung und der Beschreibung der Ausführungsbeispiele.

Eine erfindungsgemäße Möbelkomponente umfasst wenigstens einen antreibbaren Möbelbeschlag zur beweglichen Verbindung zweier Möbelteile und umfasst weiterhin einen elektrischen bzw. insbesondere elektromechanischen Motor. Der Möbelbeschlag ist an einem ersten Möbelteil der beiden Möbelteile anordenbar und insbesondere befestigbar. Der Möbelbeschlag ist dafür vorgesehen, mit dem Motor das zweite Möbelteil anzutreiben, um eine motorunterstützte Bewegung des zweiten Möbelteils zu dem ersten Möbelteil wenigstens abschnittsweise zwischen wenigstens zwei Stellungen zu erzeugen. Dabei ist eine erste Stellung der beiden Stellungen eine weiter geschlossene Stellung, in der das zweite Möbelteil einen (insbesondere der Möbelkomponente zugeordneten oder daran ausgebildeten) Stauraum stärker abtrennt oder abdeckt als in der zweiten Stellung, die eine weiter geöffnete Stellung ist. Die erste Stellung kann insbesondere eine Schließstellung sein und die zweite Stellung kann insbesondere eine wenigstens teilweise oder vollständig geöffnete Stellung oder Öffnungsstellung sein. Der Motor weist eine im Wesentliche scheibenförmige Ausgestaltung auf (ist flach bauend ausgeführt) und ist als elektrischer bürstenloser Motor mit einem (insbesondere ringförmigen) Rotor mit Magnetelementen und einem in dem Rotor angeordneten Stator mit bestrombaren Spulen ausgebildet. Durch den Stator verläuft die Rotationsachse. Die rotatorische Bewegung des Motors wird in eine Bewegung zwischen den beiden Stellungen umgewandelt. Die Magnetelemente sind insbesondere als Permanentmagnete ausgebildet. An dem Stator sind mindestens drei Phasen angeordnet. Es ist wenigstens ein Sensor umfasst. Der Sensor dient zur Erfassung oder Abschätzung wenigstens einer Position des zweiten Möbelteils. Der Sensor ist mit einer Steuerung gekoppelt und die Steuerung und der Sensor sind dazu ausgebildet und eingerichtet, ein testweises Anfahren des Motors in beide Richtungen zu vermeiden, um die Position des Motors und die davon abhängige richtige Bestromung der Spulen herauszufinden.

Die erfindungsgemäße Möbelkomponente hat viele Vorteile. Ein erheblicher Vorteil der erfindungsgemäßen Möbelkomponente besteht in dem einfachen Aufbau und dem geringen Platzbedarf. Der Motor kann durch die Konstruktion als elektrischer bürstenloser Motor, der als Außenläufer ausgebildet ist, sehr flach bauend ausgestaltet werden. Dadurch wird nur ein geringer Raumbedarf für den Motor benötigt. Dadurch, dass der Stator zentral angeordnet ist und der Rotor den Stator umgibt, wird mit dem Motor ein erheblich höheres Drehmoment erzeugt als bei Innenläufern, da der Radius größer ist. Durch die Konstruktion bedingt, muss ein dem Motor gegebenenfalls nachgeschaltetes Getriebe nicht so viele Übersetzungsstufen aufweisen, sodass der Raumbedarf insgesamt sinkt. Ein erheblicher Vorteil einer flach bauenden Ausgestaltung ist auch, dass dadurch beispielsweise in einem Oberschrank weniger Stauraum verloren geht. Ein weiterer erheblicher Vorteil eines Außenläufers ist, dass ein direkter Antrieb von dem Außenläufer aus erfolgen kann. Es muss keine Umlenkung der Drehbewegung des Antriebs von einer zentralen Motorachse nach außen erfolgen. Dadurch ist eine flachere und somit Raum sparende Bauweise möglich.

Der Begriff "flach bauend" bedeutet, dass der Motor eine im Wesentlichen scheibenförmige Ausgestaltung aufweist. Bevorzugt bedeutet "flach bauend", dass ein Verhältnis eines Durchmessers des Motors zu einer axialen Breite des Motors größer als 2:1 und insbesondere größer als 3:1 ist. Das Verhältnis kann Werte größer als 4:1 oder 5:1 erreichen und übersteigen. Damit wird ein sehr flach bauender Motor realisiert.

Besonders bevorzugt ist das erste Möbelteil als Wand ausgebildet.

Unter den Begriff "Wand" wird im Sinne der vorliegenden Erfindung insbesondere eine Möbelwand verstanden. Vorzugsweise weist die Wand erheblich größere oder großflächige Seitenflächen und erheblich kleinere oder schmalflächige Stirnseiten auf. Insbesondere ist Rotationsachse (insbesondere der Bewegung des Motors) quer und vorzugsweise orthogonal zu wenigstens einer der Seitenflächen angeordnet ist.

Eine maximale Abmessung (insbesondere Tiefe oder Höhe) einer Seitenfläche einer Wand ist besonders bevorzugt (sehr viel) größer als eine Dicke der Wand (Abmessung der Stirnseite der Wand). Insbesondere ist ein Verhältnis einer maximalen Abmessung (insbesondere maximale Tiefe und/oder maximale Höhe) einer Seitenfläche der Wand zu einer Dicke der Wand größer als fünf oder zehn oder zwanzig oder noch (erheblich) mehr. Vorzugsweise ist eine Dicke der Wand (Seitenwand) kleiner als 35 mm oder 30 mm und vorzugsweise kleiner 25 mm. Besonders bevorzugt liegt die Dicke der Wand zwischen 12 mm und 24 mm und besonders bevorzugt zwischen 16 mm und 20 mm.

Besonders bevorzugt ist eine axiale Breite des Motors kleiner als die zweifache und besonders bevorzugt 1,5fache Wandstärke der Wand bzw. der Möbelwand. In besonders bevorzugten Ausgestaltungen ist eine axiale Breite des Motors kleiner als die 0,9fache und besonders bevorzugt 0,5fache Wandstärke der Wand bzw. der Möbelwand.

Besonders bevorzugt weist die Wand eine größere Wandstärke auf als eine axiale Breite des Motors bzw. umgekehrt formuliert weist der Motor eine axiale Breite auf, die kleiner ist als eine Wandstärke der Wand bzw. der Möbelwand. Durch die Konstruktion wird eine besonders flache Bauweise ermöglicht, die, wenn im Innenraum einer Möbelkomponente positioniert, nur sehr wenig Platz beansprucht.

Besonders bevorzugt sind der Möbelbeschlag und/oder der Motor in wenigstens einer Stellung wenigstens teilweise oder wenigstens überwiegend oder vollständig in einem Aufnahmeraum in dem ersten Möbelteil aufgenommen. Besonders bevorzugt ist der Motor wenigstens im Wesentlichen oder vollständig in wenigstens einer Stellung innerhalb des Aufnahmeraums in dem ersten oder dem zweiten Möbelteil aufgenommen. Besonders bevorzugt ist der Motor vollständig innerhalb des Aufnahmeraums in dem ersten Möbelteil (oder dem zweiten Möbelteil) aufgenommen und steht über die Oberfläche des Möbelteils nicht hervor.

Ist das erste Möbelteil beispielsweise als Wand ausgebildet, so sind vorzugsweise wenigstens der Motor und besonders bevorzugt wenigstens ein wesentlicher Teil des Möbelbeschlags in wenigstens einer Stellung vollständig in dem Aufnahmeraum der Wand angeordnet bzw. aufgenommen. Der Motor steht dann besonders bevorzugt im Wesentlichen nicht über eine äußere Oberfläche der Wand hervor. Besonders bevorzugt ist eine Drehachse des Motors quer zu einer Orientierung des ersten Möbelteils ausgebildet. Die Drehachse des Motors kann quer und besonders bevorzugt senkrecht oder wenigstens etwa senkrecht bzw. orthogonal zur Oberfläche des ersten Möbelteils ausgerichtet sein.

Der Aufnahmeraum an dem ersten (oder zweiten) Möbelteil kann insbesondere als Ausnehmung ausgebildet sein oder durch eine Ausnehmung ausgebildet werden. Vorzugsweise ist der Möbelbeschlag zumindest teilweise innerhalb des ersten (oder zweiten) Möbelteils integriert.

Es ist möglich, dass der Motor und/oder der Möbelbeschlag in dem bewegbaren Möbelteil aufgenommen ist oder auch sichtbar daran befestigt ist.

In allen Ausgestaltungen ist es bevorzugt, dass das zweite Möbelteil als Klappe, Deckel, Tür oder Schubkasten oder dergleichen ausgebildet ist. Unter dem Begriff "Tür" wird im Sinne der vorliegenden Anmeldung auch eine Drehtür, Falttür oder eine Schiebetür verstanden.

Vorzugsweise ist der Möbelbeschlag in wenigstens einer Stellung wenigstens teilweise oder wenigstens überwiegend oder vollständig in einem Aufnahmeraum in dem ersten Möbelteil und/oder in dem zweiten Möbelteil aufgenommen. Beispielsweise kann der Motor in dem zweiten oder bewegbaren Möbelteil angeordnet sein. Beispielsweise in einer Blende. Das ist insbesondere - aber nicht nur - bei einer absenkbaren Innenorganisation denkbar.

Die Möbelkomponente insgesamt kann weitere Möbelelemente umfassen. Beispielsweise kann die Möbelkomponente auch zwei erste Möbelteile aufweisen. Die Möbelkomponente kann eine Wand oder 2, 3 oder mehr Wände umfassen. Möglich ist es auch, dass die Möbelkomponente zwei oder mehr "zweite Möbelteile" umfasst. Eine Möbelkomponente kann als vollständiges Möbel oder als Möbeleinheit ausgebildet sein.

Beispielsweise kann die Möbelkomponente als Oberschrank oder Unterschrank oder allgemein als Schrank oder Kommode oder dergleichen ausgebildet sein. Der Einsatz einer Möbelkomponente kann insbesondere im Wohnbereich, Schlafbereich, in der Küche oder in anderen Räumen oder auch in einem Büro erfolgen.

In bevorzugten Ausgestaltungen umfasst der Möbelbeschlag ein Getriebe (oder auch mehrere Getriebe). Der Rotor wirkt vorzugsweise auf ein Getriebeteil des Getriebes des Möbelbeschlags ein und wandelt die rotatorische Bewegung des Motors in eine Bewegung zwischen den beiden Stellungen um. Die Bewegung zwischen den beiden Stellungen kann in allen Fällen linear oder rotativ oder eine Mischform aus Linearbewegungen und Rotativbewegungen sein.

Vorzugsweise sind an dem Stator mindestens 5 Spulen und vorzugsweise wenigstens 10 Spulen und insbesondere auch mehr als 15 Spulen angeordnet. Möglich ist auch eine Konstruktion, bei der auf dem Umfang verteilt mehr als 6, 8, 10, 12, 16 oder mehr als 20 Spulen eingesetzt werden. Besonders bevorzugt ist die Anzahl der insbesondere als Permanentmagneten ausgebildeten Magnetelemente an dem Rotor genauso groß wie die Anzahl der eingesetzten Spulen oder entspricht einem ganzzahligen Vielfachen.

Erfindungsgemäß sind an dem Stator mindestens drei Phasen (Stromphasen) angeordnet. Vorzugsweise sind die Phasen über separate Kabel angeschlossen. Mehr Phasen erlauben einen ruhigeren Lauf.

Vorzugsweise ist ein maximaler Abstand zwischen zwei gegenüberliegenden Permanentmagneten bzw. Magnetelementen (erheblich) größer als eine Breite eines Magnetelementes in axialer Richtung bzw. in Richtung der Rotationsachse. Insbesondere ist der Abstand wenigstens zwischen zwei gegenüberliegenden Permanentmagneten wenigstens dreimal so groß, wie eine Breite eines Magnetelementes in axialer Richtung. Vorzugsweise beinhaltet wenigstens einer der Permanentmagneten ein Seltenerdmetall.

Erfindungsgemäß ist wenigstens ein Sensor umfasst. Erfindungsgemäß dient der wenigstens eine Sensor zur Erfassung oder Abschätzung wenigstens einer Position des zweiten Möbelteils. Der wenigstens eine Sensor ist insbesondere als digitaler und/oder anderer analoger Sensor ausgebildet. Beispielsweise ist es möglich, dass ein Inkrementaldrehgeber als Sensor in den Motor integriert ist.

Möglich ist auch, dass ein Reibrad als Sensor mit dem Motor mitdreht oder aber beispielsweise direkt eine Bewegung des zweiten Möbelteils erfasst.

Eine Abschätzung der Position des zweiten Möbelteils kann beispielsweise über eine Messung der Laufzeit erfolgen. Eine Abschätzung kann beispielsweise durch Schlupf eine gewisse Differenz zu der tatsächlichen Position des Motors und/oder des zweiten Möbelteils aufweisen.

In bevorzugten Weiterbildungen ist wenigstens ein Endlagensensor umfasst. Ein solcher Endlagensensor kann mechanisch eine Endlage über beispielsweise einen mechanischen, optischen, kapazitiven oder induktiven Schalter umfassen. Möglich ist es aber auch, dass eine Endlage beispielsweise über die Stromaufnahme des Motors detektiert wird.

Als Sensoren können Drehgeber, Strommesser, Drehzahlmesser und auch Sensoren zur Erfassung der Rotorposition des Motors und weitere aus dem Stand der Technik bekannte Sensoren eingesetzt werden.

Möglich, aber nicht erfindungsgemäß, ist auch ein sensorloses System oder ein System, bei dem zum Beispiel wenigstens eine Spule (oder mehrere Spulen) z.B. (auch wenigstens zeitweise) für Messzwecke eingesetzt werden. Beispielsweise im Stillstand oder auch während der Bewegung.

In allen Ausgestaltungen ist eine Steuerung umfasst. Erfindungsgemäß ist der Sensor mit der Steuerung gekoppelt. Erfindungsgemäß ist der Sensor mit der Steuerung gekoppelt und sind die Steuerung und der Sensor dazu ausgebildet und eingerichtet, ein testweises Anfahren des Motors in beide Richtungen zu vermeiden, um die Position des Motors und die in Folge davon abhängige richtige Bestromung der Spulen herauszufinden. Möglich , aber nicht erfindungsgemäß, sind auch sensorlose Systeme mit z. B. BLDC-Steuerungen. Damit oder auch anders kann die Rotorposition z. B. über die Bestimmung der Gegen-EMK-Spannung ermittelt werden. Möglich, aber nicht erfindungsgemäß, ist auch die Verwendung der Spulen als Sensoren.

Generell ist es möglich, dass der Möbelbeschlag und insbesondere der Motor nur bei einem Teil einer Öffnungs- und/oder Schließbewegung des zweiten Möbelteils mit dem Möbelbeschlag und/oder dem Motor gekoppelt ist. Beispielsweise ist es möglich, dass mit dem Motor nur eine leichte Öffnung bzw. eine kurze Bewegung des zweiten Möbelteils erzeugt wird. Der Benutzer kann dann das zweite Möbelteil per Hand in die gewünschte Stellung bringen.

Es ist aber auch bevorzugt, dass der Möbelbeschlag und/oder der Motor während der vollständigen Öffnungs- und/oder Schließbewegung des zweiten Möbelteils mit dem Möbelteil gekoppelt ist. Dann kann eine motorisch gesteuerte vollständige Öffnungs- und/oder Schließbewegung des zweiten Möbelteils durchgeführt werden.

In bevorzugten Ausgestaltungen umfasst das erste Möbelteil den Möbelbeschlag von wenigstens vier Seiten. Es ist auch bevorzugt, dass der Möbelbeschlag auf fünf Seiten von dem ersten Möbelteil umfasst ist. Möglich ist es aber auch, dass das erste Möbelteil den Möbelbeschlag auf einer weiteren Seite oder zwei weiteren Seiten (nur) teilweise umfasst.

Wird das erste Möbelteil beispielsweise als Wand ausgebildet, so kann der Möbelbeschlag wenigstens teilweise oder vollständig innerhalb der Wand aufgenommen sein. Dann es ist möglich und bevorzugt, dass das erste Möbelteil den Möbelbeschlag auf zwei Stirnseiten vollständig und auf einer oder zwei Stirnseiten wenigstens teilweise umfasst. Es ist ebenso möglich und bevorzugt, dass die Wand den Möbelbeschlag auf den Seitenflächen umfasst.

In besonders bevorzugten Ausgestaltungen umgibt das erste Möbelteil den Möbelbeschlag fast vollständig bis auf einen Bereich, durch den ein Aktor oder dergleichen geführt wird, um das zweite Möbelteil anzutreiben. Dazu ist nur eine relativ kleine Öffnung auf einer oder zwei Stirnflächen nötig. Beispielsweise kann die Öffnung nur einen Anteil von 10 %, 20 %, 30 % oder 50 % einer einzigen Stirnfläche betragen.

Vorzugsweise ist zumindest der elektrisch angetriebene Teil des Möbelbeschlags von einem Gehäuse insbesondere aus Metall oder einem flammhemmenden Material geschützt und vorzugsweise wenigstens teilweise davon umgeben.

Der Motor wird vorzugsweise mit Gleichspannung betrieben, wobei die Gleichspannung insbesondere kleiner gleich 120 V oder kleiner gleich 75 V oder kleiner gleich 60 V ist.

In allen Ausgestaltungen ist es besonders bevorzugt, dass wenigstens ein Energiespeicher und/oder wenigstens eine drahtgebundene und/oder drahtlose Datenschnittstelle umfasst ist.

Als Energiespeicher kann beispielsweise eine wiederaufladbare oder eine nicht wiederaufladbare Batterie oder ein entsprechender Kondensator oder ein Energiespeicher auf chemischer Basis eingesetzt werden, um wenigstens zeitweise auch bei abgeschalteter Stromversorgung Energie zu bevorraten. Es ist möglich, den Motor per Akku an einem verschiebbaren Möbelteil zu bewegen.

Die Datenschnittstelle dient zum Datenaustausch und zur Steuerung der Möbelkomponente. Eine drahtlose Datenschnittstelle kann beispielsweise über WLAN, Bluetooth, ZigBee, ZWAVE und z. B. auf den Frequenzen 433 MHz oder 868 MHz oder anderen geeigneten Frequenzen erfolgen. Als Protokolle können auch KNX oder IP eingesetzt werden.

Vorteilhaft ist die Anordnung der Permanentmagneten nach außen. Bevorzugt wird eine Polzahl größer vier und insbesondere größer acht eingesetzt. Eine Erhöhung der Polzahl ist vorteilhaft. Die Erfindung erlaubt die Verkürzung der Länge des Motors in axialer Richtung auf insbesondere weniger als 30 mm und insbesondere weniger als 25 mm und vorzugsweise unter 18 und vorzugsweise unter 16 mm. Eine Erhöhung des Durchmessers des Motors stört beim Einsatz hingegen wenig, insbesondere wenn der Motor und der Möbelbeschlag innerhalb einer Wand der Möbelkomponente angeordnet werden.

Vorteilhaft sind das hohe Drehmoment und die niedrige Drehzahl. Je nach Anwendungsfall ist ein Getriebe nicht zwingend notwendig. Ein Getriebe kann aber beispielsweise in einer Wand einer Möbelkomponente integriert werden. Besonders bevorzugt ist die Drehachse orthogonal zu Seitenfläche. Vorzugsweise ist die Drehachse parallel zu einem Klappenbeschlag oder dergleichen.

In allen Ausgestaltungen ist es möglich, mithilfe einer Zahnstange oder eines Exzenters ein zweites Möbelteil anzutreiben. Möglich ist auch der Antrieb eines Schubkastens mithilfe beispielsweise eines Zahnriemens oder einer Kette oder dergleichen.

Mit der Erfindung kann auch ein Antrieb einer höhenverstellbaren Innenorganisation mithilfe von beispielsweise Seilen, Ketten, Bowdenzügen und/oder einem Fensterheberprinzip realisiert werden.

In allen Ausgestaltungen kann der Motor auf das erste Möbelteil aufgeschraubt oder daran angebracht werden oder auch darin integriert werden.

Vorteilhaft sind der geringere apparative Aufwand und der geringere Platzbedarf insbesondere in Richtung der Drehachse des Motors. Dadurch kann eine sehr flache Konstruktion realisiert werden.

In bevorzugten Weiterbildungen umfasst das insbesondere als Wand ausgebildete erste Möbelteil wenigstens einen Kern und einen daran ausgebildeten Aufnahmeraum, wobei wenigstens ein Kern mit dem Möbelbeschlag verbunden ist. Möglich ist es auch, dass die Wand wenigstens zwei Kerne und einen Aufnahmeraum umfasst, wobei die zwei Kerne miteinander verbunden sind und an dem Aufnahmeraum der Möbelbeschlag aufgenommen ist.

In einer konkreten Ausgestaltung umfasst die Möbelkomponente einen elektromechanisch antreibbaren Möbelbeschlag, der an einem ersten Möbelteil anordenbar ist und ein relativ dazu weiteres zweites Möbelteil antreibt. Die Relativbewegung der relativ zueinander bewegbaren Möbelteile ist insbesondere eine horizontale translatorische und/oder horizontale rotatorische Bewegung oder eine vertikale translatorische und rotatorische oder eine vertikale rotatorische Bewegung. Der Möbelbeschlag weist einen elektrischen bürstenlosen Motor mit einer Rotationsachse auf und in dem Motor ist wenigstens ein digitaler oder analoger Sensor zur Bestimmung der Rotorposition integriert. Der Motor weist einen insbesondere ringförmigen Rotor mit Permanentmagneten und einen in dem Rotor angeordnetem Stator mit bestrombaren Spulen auf. Der Rotor treibt ein Getriebeteil des Möbelbeschlags an, wobei das Getriebeteil insbesondere ein mechanisches Glied des Möbelbeschlags ist.

In allen Ausgestaltungen ist es bevorzugt, dass wenigstens zwei Motoren umfasst sind. Vorzugsweise sind wenigstens zwei Motoren miteinander synchronisiert. Z. B. kann ein bewegbares Möbelteil mit mindestens zwei Motoren angetrieben werden. Eine Synchronisierung ist dann oft vorteilhaft, z. B. wenn eine linke und rechte Seite eines Korpus (und ein mittlerer Bereich) angetrieben wird. Eine Synchronisierung ist vorteilhaft, um z. B. eine Schieflage einer Blende zu vermeiden. Eine Synchronisierung ist auch vorteilhaft, um eine optisch ansprechende gleichzeitige Bewegung verschiedener Teile zu erreichen.

Es ist vorteilhaft, dass der Motor keinen weiteren Energiespeicher wie z. B. Federn benötigt.

Der Motor kann eine Rutsch-/Überlastkupplung besitzen. Das erhöht die Sicherheit des Benutzers (Klemmschutz) oder den Schutz des Motors selbst oder kann als Freilauf eingesetzt werden.

Es ist in allen Fällen auch möglich, dass sich das Möbelteil manuell betreiben lässt.

Weitere Vorteile und Merkmale der vorliegenden Erfindung ergeben sich aus den Ausführungsbeispielen, die im Folgenden mit Bezug auf die beiliegenden Figuren erläutert werden.

In den Figuren zeigen:
- Figur 1: eine schematische perspektivische Ansicht einer ersten Ausführungsform einer erfindungsgemäßen Möbelkomponente;
- Figur 2: eine schematische perspektivische Ansicht der Möbelkomponente nach Figur 1 in einer anderen Stellung;
- Figuren 3-5: weitere Ausführungsformen erfindungsgemäßer Möbelkomponenten;
- Figur 6: eine Draufsicht auf einen Motor eines Möbelbeschlags einer erfindungsgemäßen Möbelkomponente;
- Figur 7: eine schematische Seitenansicht einer Antriebsanordnung eines Möbelbeschlags;
- Figur 8: eine Draufsicht auf eine Antriebsanordnung für eine erfindungsgemäße Möbelkomponente;
- Figuren 9-11: vergrößerte schematische Details aus Figur 8;
- Figur 12: eine schematische Seitenansicht einer Möbelkomponente mit einem Exzenter an der Antriebsanordnung;
- Figur 13: eine schematische Seitenansicht einer Möbelkomponente mit einem Schubkastenantrieb über eine Zahnstange;
- Figur 14: eine schematische Seitenansicht einer weiteren Möbelkomponente; und
- Figur 15: eine schematische perspektivische Darstellung eines Schrankes.

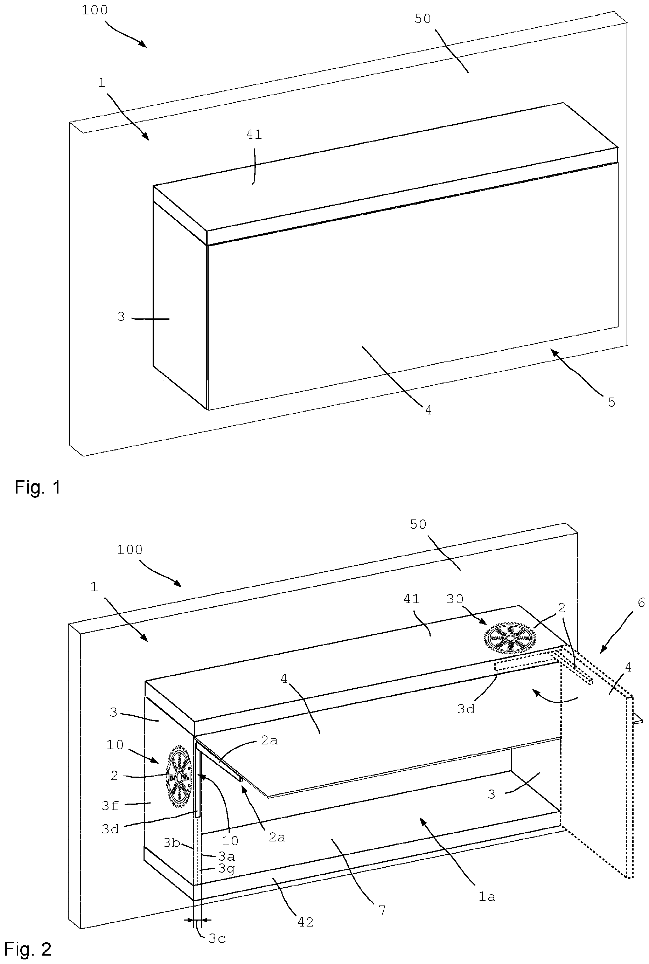

Mit Bezug auf die Figuren 1 und 2 wird ein erstes Ausführungsbeispiel einer erfindungsgemäßen Möbelkomponente erläutert. Figur 1 zeigt eine stark schematische perspektivische Darstellung einer erfindungsgemäßen Möbelkomponente 1 in der ersten Stellung 5, welche hier eine Schließstellung ist. Die Möbelkomponente 1 weist hier wenigstens ein erstes Möbelteil 3 auf, welches hier als Wand ausgebildet ist. Wie aus Figur 2 hervorgeht, ist auch an einem anderen seitlichen Ende der Möbelkomponente 1 eine Wand als erstes Möbelteil vorgesehen.

Es ist aber auch möglich, dass eine Möbelkomponente 1 nur eine einzige seitliche Wand umfasst, die dann beispielsweise in der Mitte der Möbelkomponente 1 vorgesehen ist.

Hier ist die Möbelkomponente 1 aber insgesamt als Schrank bzw. Oberschrank 100 ausgebildet. Die Möbelkomponente ist an einer Raumwand 50 befestigt und weist einen Oberboden 41 auf. Das zweite Möbelteil 4 ist relativ zu dem ersten Möbelteil 3 bewegbar.

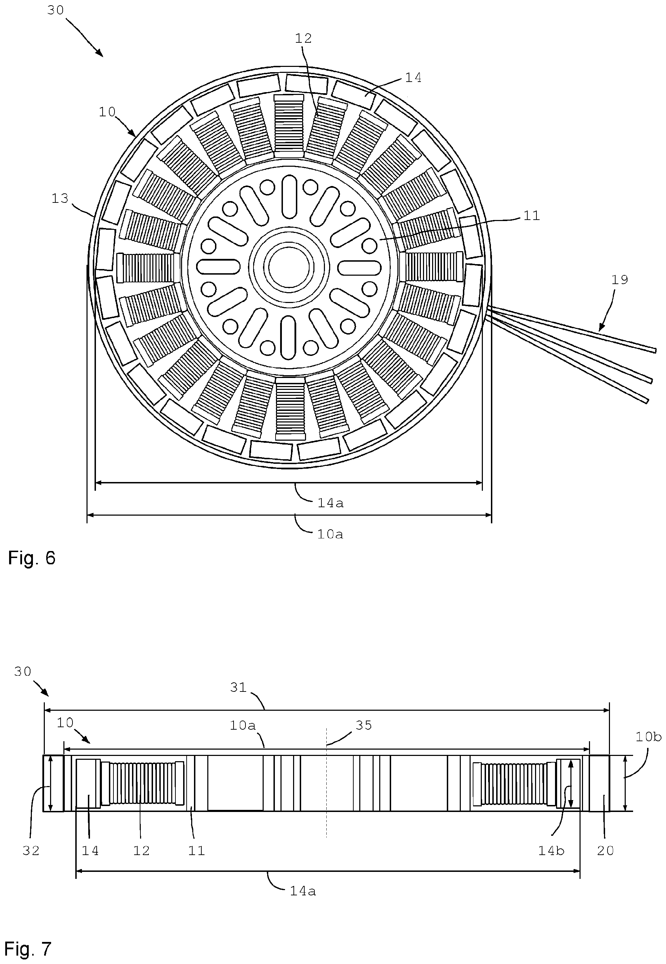

Figur 2 zeigt die Möbelkomponente 1 bzw. den Oberschrank 100 in der zweiten Stellung 6, in der das zweite Möbelteil 4 geöffnet ist. Hier ist das zweite Möbelteil 4 als Klappe ausgebildet und wird über den Möbelbeschlag 2 beweglich zwischen der in Figur 1 dargestellten geschlossenen Stellung 5 und der in Figur 2 dargestellten geöffneten Stellung 6 bewegbar geführt. Zum Antrieb dient der Motor 10, der des besseren Verständnisses eingezeichnet ist. Tatsächlich befindet er sich innerhalb der Seitenwand und ist bei einer massiven Wand 3 wie hier von außen praktisch nicht sichtbar. Da die Antriebsanordnung 30 (vergleiche Figur 6) mit dem Motor 10 vollständig innerhalb des Aufnahmeraums 3d in der Wand 3 aufgenommen ist, ist an sich nur der an dem bewegbaren Möbelteil 4 befestigte Teil der Beschlagskomponente 2a des Möbelbeschlags 2 erkennbar.

Der Aufnahmeraum 3d ist seitlich vollständig von der Wand 3 umgeben, sodass die resultierende Breite des Aufnahmeraums 3d kleiner ist als die Wandstärke 3c der Wand.

Der Oberschrank 100 umfasst des Weiteren einen Unterboden 42. Im Inneren des Oberschrankes 100 ist ein Stauraum 7 zur Aufnahme unterschiedlichster Gegenstände ausgebildet. Der Stauraum 7 ist von der Vorderseite, die hier die Zugangsseite 1a bildet, zugänglich. Der Aufnahmeraum 3d ist ebenfalls nach vorne hin geöffnet. Der Aufnahmeraum 3d wird praktisch durch eine Ausnehmung in der Wand 3 gebildet.

In Figur 2 ist zusätzlich gestrichelt noch eine alternative Ausführungsform eingezeichnet, bei der der Oberboden 41 das erste Möbelteil bildet. Gestrichelt eingezeichnet ist in dem Oberboden 41 ein Aufnahmeraum 3d, in dem die Antriebsanordnung 30 aufgenommen ist, um die ebenfalls gestrichelt eingezeichnete Drehtür als zweites Möbelteil 4 mit dem Motor 10 gesteuert antreiben zu können.

In anderen Ausgestaltungen ist es auch möglich der Motor 10 und die Antriebsanordnung 30 in der bewegbaren Tür oder Klappe angeordnet sind und nicht in dem feststehenden Möbelteil.

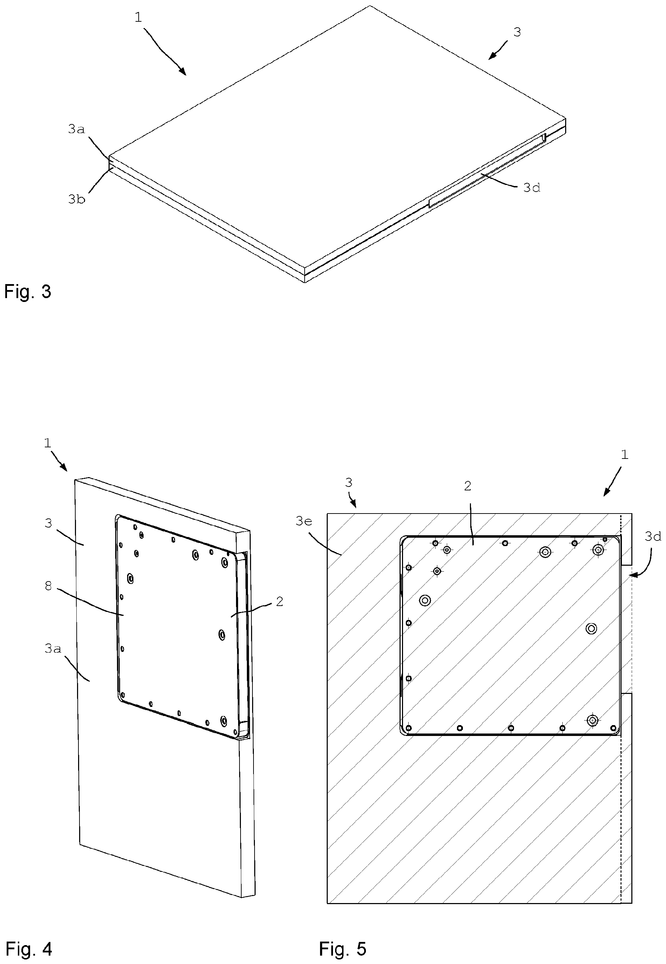

In den Figuren 3 - 5 sind unterschiedliche Ausführungen von Möbelkomponenten 1 in perspektivischer Darstellung abgebildet, wobei in Figur 3 die Wand 3 durch 2 Kerne 3a und 3b hergestellt wird, an denen jeweils eine Ausnehmung ausgebildet ist. Zusammen ergeben die Ausnehmungen an den Kernen 3a und 3b den Aufnahmeraum 3d, an dem die Antriebsanordnung 30 zusammen mit dem Möbelbeschlag 2 aufgenommen wird.

Bei der Fertigung ist es möglich, dass der Möbelbeschlag 2 mit der Antriebsanordnung 30 in die Ausnehmungen an den Kernen 3a und 3b eingelegt wird, bevor die beiden Kerne miteinander verbunden und insbesondere verklebt werden. Möglich ist es auch, dass die vordere Öffnung des Aufnahmeraums 3d so bemessen ist, dass der Möbelbeschlag 2 nach der vollständigen Herstellung des ersten Möbelteils 3 bzw. der Wand in den Aufnahmeraum 3d von außen eingeschoben werden kann.

In Figur 4 ist eine Variante abgebildet, bei der nur ein Kern 3a verwendet wird und bei dem die Ausnehmung bis zu einer seitlichen Oberfläche der Wand erreicht. Dann kann der Möbelbeschlag 2 mit der Antriebsanordnung 30 von der Seite in den Aufnahmeraum 3d eingelegt werden.

In Figur 4 ist zu erkennen, dass der Möbelbeschlag 2 ein hier metallisches Gehäuse 8 aufweist, in dessen Innerem die Antriebsanordnung 30 untergebracht ist.

Figur 5 zeigt eine Variante der Möbelkomponente 1, bei der ebenfalls nur ein Kern 3a eingesetzt wird, dessen Ausnehmung zur Aufnahme des Möbelbeschlags 2 ausgebildet ist. Nach der Montage des Möbelbeschlags in dem Aufnahmeraum 3d der Möbelkomponente 1 kann anschließend die hier schraffiert eingezeichnete Decklage 3e aufgebracht werden, sodass nur an der vorderen Stirnseite der Möbelbeschlag 2 innerhalb des Aufnahmeraums 3d zugänglich verbleibt. Mit einer Decklage kann die Antriebsanordnung 30 teilweise oder insbesondere vollständig abgedeckt werden.

Die gestrichelte Kontur an der vorderen Stirnseite zeigt, dass der Zugang zu dem Aufnahmeraum 3d beschränkt sein kann. Bei dieser Variante müsste zum Austausch des Möbelbeschlags 2 die Decklage 3e entfernt werden.

Figur 6 zeigt eine Draufsicht auf eine Ausführung der Antriebsanordnung 30 mit dem Motor 10. Eingesetzt wird ein Außenläufermotor, bei dem an dem Stator 11 hier insgesamt über dem Umfang verteilt 24 elektrische Spulen 12 angeordnet sind. Entsprechend sind an dem Rotor 13 auf dem Umfang verteilt hier 24 Permanentmagnete 14 als Magnetelemente um den Stator herum angeordnet.

Der als Außenläufermotor ausgebildete Motor 10 weist einen Durchmesser 10a des Rotors von hier etwa 70 mm auf. Der maximale Außendurchmesser an den Permanentmagneten 14 ist etwas geringer und liegt bei etwas über 65 mm.

Der Motor 10 ist als elektrischer bürstenloser Motor ausgeführt. Durch die Konstruktion bedingt können die Anschlusskabel 19 zum Stator geführt werden, sodass eine Übertragung durch Schleifkontakte hier unterbleiben kann, wenn Permanentmagneten 14 eingesetzt werden.

Die Antriebsanordnung 30 und der Motor 10 bilden insgesamt und auch jeweils für sich separat eine flache scheibenförmige Anordnung, wobei das Verhältnis von Außendurchmesser 10a des Motors 10 zu der axialen Baubreite 10b größer zwei oder drei oder vier oder 6 oder 8 oder noch größer ist. Die axiale Breite 10b des Motors 10 kann der axialen Breite der Permanentmagneten 14b entsprechen. Hier weist die Antriebsanordnung 30 die gleiche axiale Breite 10b auf wie der Motor. Ein Abstand 14a zwischen zwei sich gegenüberliegenden Permanentmagneten 14 ist mehrfach größer als eine axiale Breite 14b der Permanentmagneten 14 oder des Motors 10.

In Figur 7 ist die axiale Breite 10b des Motors 10 etwa so groß wie die axiale Breite 32 der Antriebsanordnung 30. Das Verhältnis des Durchmessers 10a des Rotors zu der axialen Breite 10b des Motors ist hier größer als 5:1 und kann Werte größer als 6:1 erreichen und übersteigen. Damit wird ein sehr flach bauender Motor realisiert. Der Durchmesser der Antriebsanordnung ist abhängig von dem eingesetzten Getriebe entsprechend größer. Zentral ist die Rotationsachse 35 eingezeichnet.

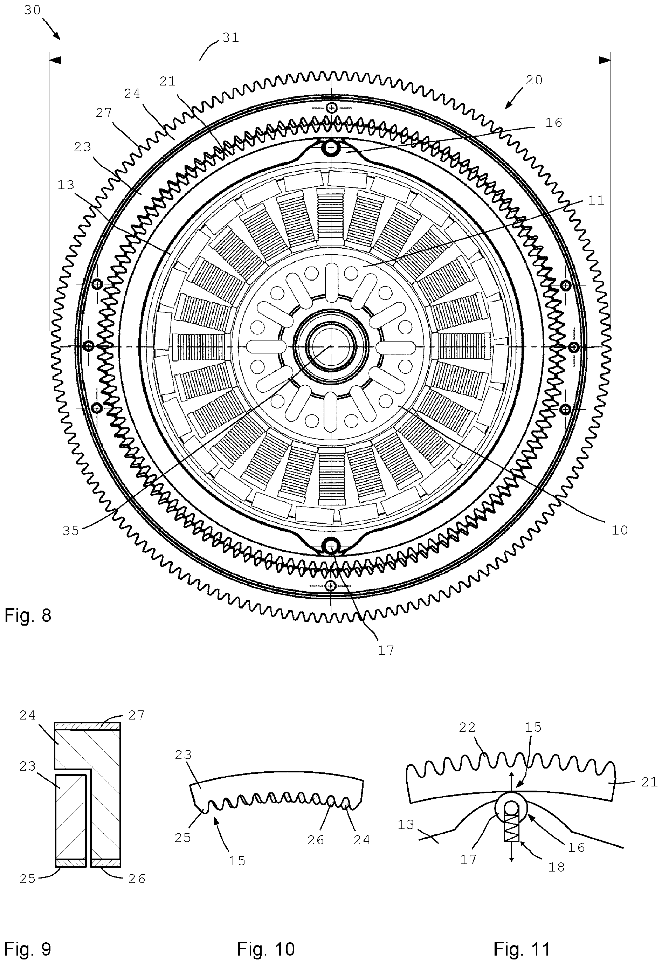

Figur 8 zeigt eine Antriebsanordnung 30 mit einem Getriebe 20 und dem zentral angeordneten Motor 10.

Der Motor 10 weist den zentralen Stator 11 auf, an dem die elektrischen Spulen 12 angeordnet sind. An dem Rotor 13 sind die Permanentmagnete 14 angeordnet. Einstückig mit dem Rotor 13 ausgebildet oder separat daran befestigt ist die unrunde Außenkontur mit den Übertragungseinheiten 16. Hier sind zwei Übertragungseinheiten auf dem Umfang des Rotors 13 vorgesehen. Möglich ist es auch, dass nur eine Übertragungseinheit 16 oder dass drei Übertragungseinheiten auf dem Umfang verteilt angeordnet sind.

Eine Übertragungseinheit 16 drückt lokal begrenzt auf das flexible Zahnringelement 21, welches den Rotor 13 vollständig und geschlossen umgibt. Die Innenabmessungen des flexiblen Zahnringelements 21 sind so abgemessen, dass bei der Drehung des Rotors 13 die Übertragungseinheit 16 das flexible Zahnringelement 21 lokal verformt und lokal nach außen drückt. Dadurch gerät in dem Bereich der Übertragungseinheiten 16 die Außenverzahnung 22 des flexiblen Zahnringelements 21 in definierten Eingriff mit der Innenverzahnung 25 des feststehenden Außenrings 23 und der hier (axial) dahinter angeordneten Innenverzahnung 26 des drehbaren Außenrings 24, von dem in Figur 8 im Wesentlichen nur der äußere Teil mit der Außenverzahnung 27 sichtbar ist.

Der genauere Aufbau und die Funktionsweise der Antriebsanordnung 30 werden in Zusammenschau mit den Figuren 9 - 11 besser verständlich, die auf schematische Art und Weise Details der Antriebsanordnung 30 darstellen.

Figur 9 zeigt dabei einen schematischen Querschnitt durch den feststehenden Außenring 23 und den drehbaren Außenring 24. Es ist erkennbar, dass der feststehende Außenring 23, der insbesondere mit dem Stator 11 verbunden ist, über eine Innenverzahnung 25 verfügt. Hier beträgt die Zähnezahl der Innenverzahnung des feststehenden Außenrings 23 insgesamt 126 Zähne und ist identisch mit der Zähnezahl der Außenverzahnung 22 des flexiblen Zahnringelements 21, welches hier ebenfalls 126 Zähne umfasst.

Der drehbare Außenring 24 weist 128 Zähne an seiner Innenverzahnung 26 auf.

Erkennbar ist, dass der drehbare Außenring 24 den feststehenden Außenring 23 praktisch U-förmig umgreift.

In Figur 10 ist schematisch ein Ausschnitt aus der Darstellung von Figur 8 vergrößert dargestellt, wobei hier nur schematisch ein Teil des feststehenden Außenrings 23 und des sich dahinter befindenden drehbaren Außenrings 24 abgebildet sind. Der feststehende Außenring 23 weist die schematisch dargestellte Innenverzahnung 25 auf. Von dem sich dahinter befindenden drehbaren Außenrings 24 sind nur Teile einiger Zähne der Innenverzahnung 26 zu erkennen.

Die Zähnezahl der Innenverzahnung 25 des feststehenden Außenrings 23 unterscheidet sich von der Zähnezahl der Innenverzahnung 26 des drehbaren Außenrings 24. Deshalb werden mit zunehmendem Umfangsabstand von der Anlagestelle 15 die Unterschiede besser sichtbar und es ist ein größerer Anteil der einzelnen Zähne 26 des drehbaren Außenrings 24 sichtbar. Da, wo die Übertragungseinheit 16 für eine lokale Verformung und einen lokalen Eingriff des flexiblen Zahnringelements 21 in die Innenverzahnungen 24 und 26 der Außenringe 23 und 24 sorgt, fluchten beide Verzahnungen, da die Außenverzahnung des flexiblen Zahnringelements 21 dort in beide Innenverzahnungen in den Außenringen 23 und 24 lokal eingreift. Es wird so dafür gesorgt, dass der drehbare Außenring 24 jeweils nachgezogen wird, sodass an der Anlagestelle 15 die Zähne der beiden Verzahnungen 25 und 26 miteinander fluchten, während mit zunehmendem Abstand von der Anlagestelle 15 sich aufgrund der leicht unterschiedlichen Zähnezahl ein entsprechender Versatz ergibt.

Figur 11 zeigt eine vergrößerte und schematische Darstellung des Eingriffs der Übertragungseinheit 16 an der Anlagestelle 15 und die Verformung des flexiblen Zahnringelements 21.

Durch die auf dem Umfang des Rotors 13 angebrachte Übertragungseinheit wird das flexible Zahnringelement 21 lokal und hier radial nach außen gedrückt. Dadurch geraten die Zähne der Außenverzahnung 22 in entsprechenden Eingriff mit den Innenverzahnungen der Außenringe 23 und 24.

Um die Reibung zu senken, ist es bevorzugt, dass an der Anlagestelle 15 die Übertragungseinheit 16 ein drehbares Übertragungselement 17 umfasst, welches beispielsweise als Rolle oder Walze oder dergleichen ausgebildet sein kann und drehbar an dem Rotor aufgenommen ist. Dadurch kann das drehbare Übertragungselement 17 auf dem Innenumfang des flexiblen Zahnringelements 21 ablaufen.

Dargestellt ist in Figur 11 eine Variante, bei der das drehbare Übertragungselement 17 durch eine Vorbelastungseinrichtung 18 radial nach außen gedrückt wird. Die Vorbelastungseinrichtung 18 kann beispielsweise über eine Feder verfügen, um das drehbare Übertragungselement 17 nach außen zu drücken. Die Vorbelastungseinrichtung kann auch aus einem Formgedächtniselement bestehen, dass sich sowohl bei einer mechanischen als auch bei einer thermischen Überlastung des Motors verformt und für einen Freilauf des flexiblen Zahnringelements sorgt.

Durch die Feder wird für einen gleichmäßigen Eingriff gesorgt. Ein Vorteil des Einsatzes einer Vorbelastungseinrichtung ist auch, dass ein einfacher Überlastschutz integriert werden kann.

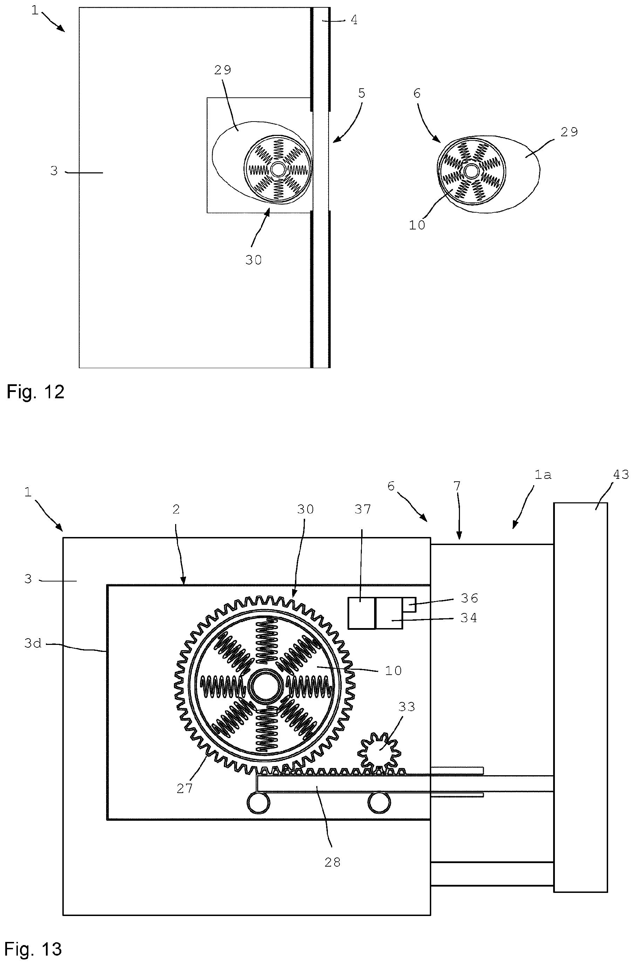

Figur 12 zeigt eine schematische Seitenansicht einer Möbelkomponente 1, bei der die Antriebsanordnung 30 mittels einer hier exzentrischen Getriebekomponente das zweite Möbelteil 4 von der in Figur 12 links dargestellten Schließstellung 5 in eine wenigstens etwas geöffnete Stellung überführen kann. Durch Drehung der hier etwa eiförmigen Getriebekomponente 29 kann das zweite Möbelteil hier nach rechts bewegt werden, sodass sich ein Öffnungsspalt ergibt. Die Antriebsanordnung 30 ist in Figur 12 rechts in einer entsprechenden Stellung dargestellt, die eine Öffnungsstellung 6 ergibt. Bei dem Öffnungsvorgang durch die Antriebsanordnung 30 ist nur eine Teilumdrehung des Getriebes und/oder des Motors 10 notwendig. Die Teilumdrehung läuft mit sehr niedriger Geschwindigkeit, so dass das zweite Möbelteil 4 nicht schlagartig aufgestoßen wird.

Figur 13 zeigt eine Variante der Möbelkomponente 1, bei der die Antriebsanordnung 30 über eine Außenverzahnung 27 eine Schubstange 28 als Getriebekomponente 29 antreibt. Durch den Antrieb der Schubstange 28 kann beispielsweise die Frontblende 43 bzw. ein Schubkasten geöffnet werden, sodass in der dargestellten Öffnungsstellung 6 der Stauraum 7 von der hier oben angeordneten Zugangsseite 1a aus zugänglich ist.

Die Antriebsanordnung 30 ist hier in dem Aufnahmeraum 3d in dem ersten Möbelteil 3 aufgenommen. Auch die weiteren Teile des Möbelbeschlags 2 sind dort aufgenommen.

Hier in Figur 13 ist an dem Möbelbeschlag 2 beispielhaft für alle Ausführungsbeispiele eine Steuerung 34 eingezeichnet, die über eine Datenschnittstelle oder wenigstens eine Datenschnittstelle 36 verfügt. Über die Datenschnittstelle 36 kann drahtgebunden und/oder drahtlos mit einer zentralen Haussteuerung oder direkt mit einem Benutzer kommuniziert werden. Beispielsweise kann über WLAN, Bluetooth, ZigBEE, ZWAVE oder andere gängige Protokolle auf unterschiedlichen Frequenzen und zum Beispiel 433 MHz oder 868 MHz mit der Möbelkomponente kommuniziert werden. Dadurch ist es möglich, über eine Haussteuerung oder über einen stationären oder mobilen Computer die Öffnungs- und/oder Schließbewegung an der Möbelkomponente 1 zu steuern. Der Energiespeicher 37 kann vorgesehen sein, um beispielsweise bei einem mobilen Möbelstück für eine Anzahl von Öffnungs- und/oder Schließbewegungen und oder für einen vorbestimmten Zeitraum genügend Energie für den Betrieb bereitzustellen.

An die Steuerung ist wenigstens ein Sensor 33 angeschlossen, der die Bewegung des Motors 10 und/oder des zweiten Möbelteils 4 überwacht.

Des Weiteren kann der Motor 10 interne Sensoren aufweisen, mit denen eine Positionserkennung möglich ist. Möglich ist es auch, den Antriebsstrom des Motors 10 zu überwachen, um aus den Messergebnissen auf Hindernisse und/oder an Endlagen zu schließen.

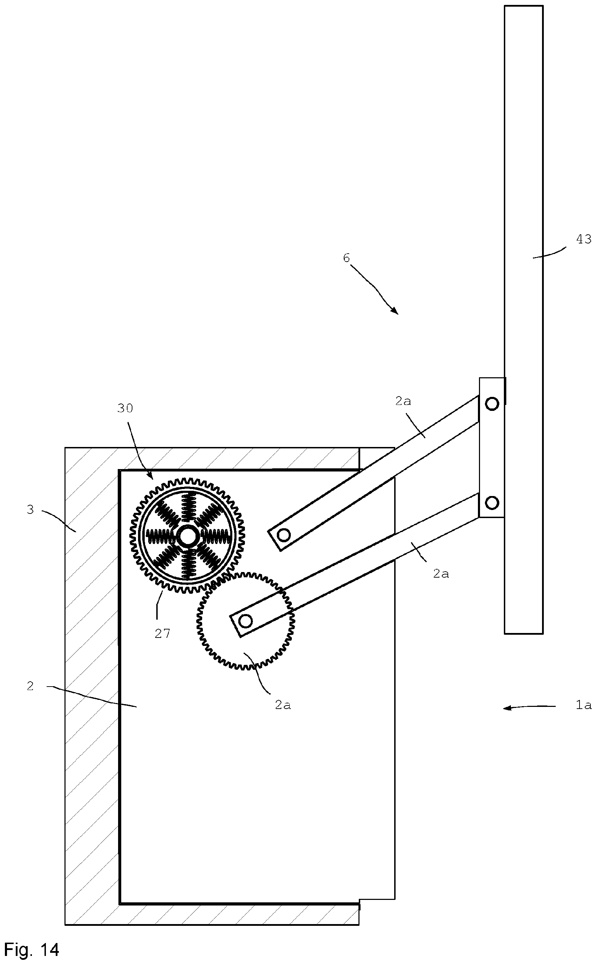

Figur 14 zeigt eine Variante, bei der die Antriebsanordnung 30 über eine Außenverzahnung 27 eine Beschlagkomponente 2a und hier ein Zahnrad antreibt, mit dem weitere Beschlagkomponenten 2a, die Hebel und dergleichen umfassen können, angetrieben werden, um eine Frontblende 43 als zweites Möbelteil 4 anzuheben und den Stauraum 7 von der vorderen Zugangsseite 1a aus zugänglich zu machen.

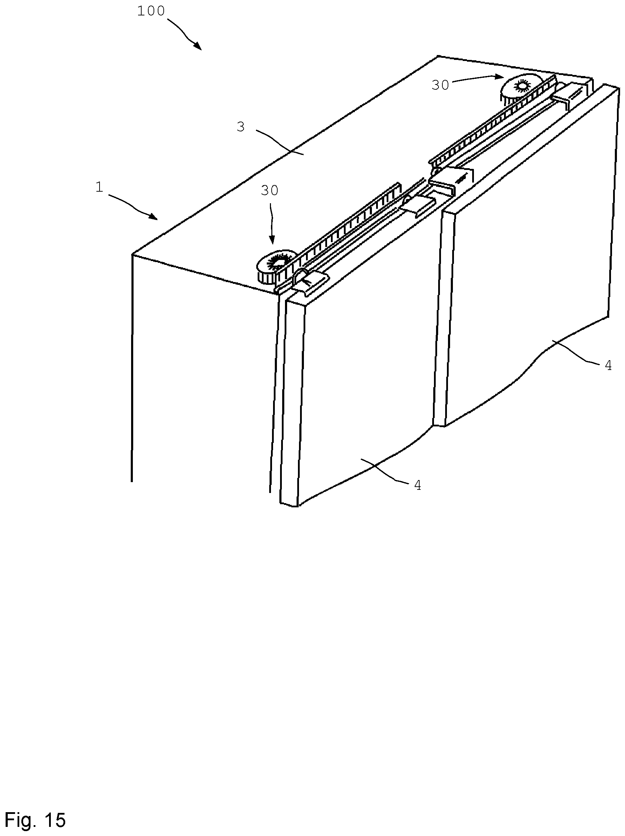

Figur 15 zeigt schließlich einen Schrank bzw. Oberschrank 100, bei dem die Antriebsanordnung 30 oben angeordnet ist und zur seitlichen Verschiebung zweier als Schiebetüren ausgeführten zweiten Möbelteile dienen. An der Antriebsanordnung 30 kann dazu eine Zahnstange vorgesehen sein oder es sind andere Übertragungsmechanismen implementiert, um die Drehbewegung des Motors 10 in eine seitliche Verschiebung der Schiebetüren 4 zu bewirken.

Insgesamt stellt die Erfindung eine vorteilhafte Möbelkomponente 1 zu Verfügung, bei der nur wenig Bauraum für den elektrischen Motor und den Antrieb insgesamt verwendet wird. Die Antriebsanordnung insgesamt kann sehr flach ausgestaltet werden, sodass die Antriebsanordnung innerhalb einer Möbelwand untergebracht werden kann.

An der Möbelkomponente ist vorzugsweise ein Stauraum 7 ausgebildet oder der Stauraum 7 ist der Möbelkomponente zugeordnet. Der Stauraum ist insbesondere als Aufnahmeabteil bzw. an einem Aufnahmeabteil ausgebildet. Ein Aufnahmeabteil weist vorzugsweise wenigstens einen oberen Boden und/oder wenigstens einen unteren Boden und wenigstens einer seitliche Wand auf bzw. wird dadurch gebildet. Das Aufnahmeabteil ist durch das bewegbare bzw. zweite Möbelteil wenigstens teilweise abdeckbar oder verschließbar. Das Aufnahmeabteil kann so beispielsweise auch an einem Schubkasten ausgebildet sein, der an einer Wand 3 geführt wird. Der Stauraum 7 befindet sich dann im Schubkasten.

Der Möbelbeschlag kann neben dem Motor 10 bzw. der Antriebsanordnung 30 wenigstens eine weitere Beschlagkomponente aus einer Gruppe von Beschlagkomponenten umfassen, welche Hebelarme, Drehstellen, Anschläge, Dämpferkomponenten Kraftspeichereinrichtungen, Aktuatoren, Sensoren, Spiralfedern, Druckspeicher, teleskopierbare Schienensysteme, Gleitschienen wie zu Plattenschienen, Mittelschienen, Frontblendenschienen, Anschlussprofile, Befestigungselemente und Kulissenführungen umfasst.

Vorzugsweise umfasst eine Wand als erstes Möbelteil wenigstens einen Kern oder auch zwei oder mehr Kerne. Wenn die Wand zwei Kerne umfasst, sind diese insbesondere miteinander verbunden.

Vorzugsweise ist an der Wand bzw. dem Kern oder den Kernen einer Wand ein Aufnahmeraum 3d ausgebildet. Vorzugsweise bewegt sich wenigstens eine der Beschlagkomponenten 2a bzw. ein Teil des Möbelbeschlags 2 beim Antrieb des Motors 10 aus der Wand 3 heraus.

Der Kern und/oder der Möbelbeschlag kann mit wenigstens einer Decklage verbunden sein. An den Seitenflächen der Wand kann eine durchgängige Decklage ausgebildet sein.

Die Wand umfasst vorzugsweise zwei gegenüberliegende Seitenflächen und eine Mehrzahl an Stirnseiten, wobei an der Wand zwischen den Seitenflächen der Aufnahmeraum ausgebildet ist, in dem der Möbelbeschlag 2 zum Antrieb und zur Führung eines bewegbaren Möbelteils eines zweiten bewegbaren Möbelteils aufgenommen ist. Der Aufnahmeraum kann an einer oder auch an wenigstens zwei Stirnseiten Öffnungsabschnitte aufweisen, an denen der Aufnahmeraum nach außen geöffnet ist. Es ist möglich, dass der Möbelbeschlag 2 bei der Überführung von der ersten Stellung in die zweite Stellung sich wenigstens in den beiden Öffnungsabschnitten an den wenigstens zwei Stirnseiten bewegt.

### Bezugszeichenliste:

- 1: Möbelkomponente
- 1a: Zugangsseite
- 2: Möbelbeschlag
- 2a: Beschlagkomponente
- 3: Möbelteil, Wand
- 3a: Kern
- 3b: Kern
- 3c: Wandstärke
- 3d: Aufnahmeraum in 3
- 3e: Decklage
- 3f: Seitenfläche
- 3g: Stirnseite
- 4: Möbelteil, bewegbares Möbelteil, Klappe, Deckel, Tür
- 5: erste Stellung, Schließstellung
- 6: zweite Stellung, Öffnungsstellung
- 7: Stauraum
- 8: Gehäuse
- 10: Motor
- 10a: Durchmesser
- 10b: axiale Breite
- 11: Stator
- 12: Spule
- 13: Rotor
- 14: Magnetelement, Permanentmagnet
- 14a: Abstand
- 14b: Breite von 14
- 15: Anlagestelle
- 16: Übertragungseinheit
- 17: drehbares Übertragungselement
- 18: Vorbelastungseinrichtung
- 19: Kabel
- 20: Getriebe
- 21: Getriebeteil, Zahnringelement
- 22: Außenverzahnung von 21
- 23: feststehender Außenring
- 24: drehbarer Außenring
- 25: Innenverzahnung von 23
- 26: Innenverzahnung von 24
- 27: Außenverzahnung
- 28: Schubstange
- 29: Getriebekomponente
- 30: Antriebsanordnung
- 31: Durchmesser
- 32: axiale Breite
- 33: Sensor
- 34: Steuerung
- 35: axiale Richtung
- 36: Datenschnittstelle
- 37: Energiespeicher
- 41: Boden, Oberboden
- 42: Boden, Unterboden
- 43: Frontblende
- 50: Raumwand
- 100: Schrank, Oberschrank

## Patentansprüche

1. Möbelkomponente (1) mit einem antreibbaren Möbelbeschlag (2) zur beweglichen Verbindung zweier Möbelteile (3, 4) und mit einem elektrischen Motor (10), wobei der Möbelbeschlag (2) an einem ersten Möbelteil (3) der beiden Möbelteile (3, 4) anordenbar ist und dafür vorgesehen ist, mit dem Motor (10) das zweite Möbelteil (4) anzutreiben, um eine motorunterstützte Bewegung des zweiten Möbelteils (4) zu dem ersten Möbelteil (3) wenigstens abschnittsweise zwischen wenigstens zwei Stellungen (5, 6) zu erzeugen,
wobei eine erste Stellung (5) der beiden Stellungen (5, 6) eine weiter geschlossene Stellung ist, in der das zweite Möbelteil (4) einen Stauraum (7) stärker abtrennt als in der zweiten Stellung (6), die eine weiter geöffnete Stellung ist,
wobei der Motor (10) eine im Wesentlichen scheibenförmige Ausgestaltung aufweist und als elektrischer bürstenloser Motor mit einem Rotor (13) mit Magnetelementen (14) und einem in dem Rotor (13) angeordneten Stator (11) mit bestrombaren Spulen (12) ausgebildet ist, und durch den Stator (11) eine Rotationsachse (35) des Rotors (13) verläuft, und dass die rotatorische Bewegung des Motors (10) in eine Bewegung zwischen den beiden Stellungen (5, 6) umgewandelt wird,
und wobei an dem Stator (11) mindestens drei Phasen angeordnet sind,
**dadurch gekennzeichnet, dass** wenigstens ein Sensor (33) zur Erfassung oder Abschätzung wenigstens einer Position des zweiten Möbelteils (4) umfasst ist
und dass der Sensor (33) mit einer Steuerung (34) gekoppelt ist und wobei die Steuerung (34) und der Sensor (33) dazu ausgebildet und eingerichtet sind, ein testweises Anfahren des Motors (10) in beide Richtungen zu vermeiden, um die Position des Motors (10) und die davon abhängige richtige Bestromung der Spulen (12) herauszufinden.

2. Möbelkomponente (1) nach dem vorhergehenden Anspruch, wobei das erste Möbelteil (3) als Wand ausgebildet ist.

3. Möbelkomponente (1) nach dem vorhergehenden Anspruch, wobei die Wand eine größere Wandstärke (3c) aufweist als eine axiale Breite (32) des Motors (10).

4. Möbelkomponente (1) nach Anspruch 2, wobei die Wand großflächige Seitenflächen (3f) und schmalflächige Stirnseiten (3g) aufweist und die Rotationsachse (35) quer zu einer der Seitenflächen (3f) angeordnet ist.

5. Möbelkomponente (1) nach einem der vorhergehenden Ansprüche, wobei das zweite Möbelteil (4) als Klappe, Deckel, Tür oder Schubkasten ausgebildet ist.

6. Möbelkomponente (1) nach einem der vorhergehenden Ansprüche, wobei der Möbelbeschlag (2) ein Getriebe (20) umfasst und wobei der Rotor (13) auf ein Getriebeteil (21) des Getriebes (20) des Möbelbeschlags (2) einwirkt und die rotatorische Bewegung des Motors (10) in eine Bewegung zwischen den beiden Stellungen (5, 6) umwandelt und/oder wobei an dem Stator (11) mindestens fünf Spulen (12) angeordnet sind und/oder wobei ein maximaler Abstand (14a) zwischen zwei gegenüberliegenden Magnetelementen (14) größer ist, als eine Breite (14b) eines Magnetelementes (14) in Richtung der Rotationsachse (35).

7. Möbelkomponente (1) nach einem der vorhergehenden Ansprüche, wobei der Sensor (33) als digitaler und/oder analoger Sensor ausgebildet ist.

8. Möbelkomponente (1) nach dem vorhergehenden Anspruch, wobei wenigstens ein Endlagensensor umfasst ist und/oder wobei wenigstens ein Sensor (33) in dem Motor (10) integriert ist.

9. Möbelkomponente (1) nach einem der vorhergehenden Ansprüche, wobei der Möbelbeschlag (2) bei einer vollständigen Öffnungs- und Schließbewegung des zweiten Möbelteils (4) mit diesem Möbelteil (4) während eines Teiles oder während der gesamten Bewegung gekoppelt ist.

10. Möbelkomponente (1) nach einem der vorhergehenden Ansprüche, wobei das erste Möbelteil (3) den Möbelbeschlag (2) von wenigstens vier oder fünf Seiten umfasst und wobei das erste Möbelteil (3) den Möbelbeschlag (2) insbesondere auf einer weiteren Seite teilweise umfasst.

11. Möbelkomponente (1) nach einem der vorhergehenden Ansprüche, wobei zumindest der elektrisch angetriebene Teil des Möbelbeschlags (2) von einem Gehäuse (8) aus Metall oder flammhemmend geschützt ist
und/oder wobei der Motor (10) mit Gleichspannung betrieben wird und wobei die Gleichspannung insbesondere kleiner gleich 120V oder kleiner gleich 75V oder kleiner gleich 60V ist und/oder wobei ein Energiespeicher (37) und/oder eine drahtgebundene oder drahtlose Datenschnittstelle umfasst ist.

12. Möbelkomponente (1) nach einem der vorhergehenden Ansprüche, wobei die Wand (2) wenigstens einen Kern (3a) und einen daran ausgebildeten Aufnahmeraum (3d) umfasst und wobei wenigstens ein Kern (3a) mit dem Möbelbeschlag (10) verbunden ist oder wobei die Wand (3) wenigstens zwei Kerne (3a, 3b) und einen Aufnahmeraum (3d) umfasst, und wobei wenigstens zwei Kerne (3a, 3b) miteinander verbunden sind und an dem Aufnahmeraum (3d) der Möbelbeschlag (2) aufgenommen ist.

13. Möbelkomponente (1) nach einem der vorhergehenden Ansprüche, umfassend wenigstens zwei Motoren, die miteinander synchronisiert werden.

## Claims

1. Furniture component (1) with a driven furniture fitting (2) to movably connect two furniture elements (3, 4), and with an electric motor (10), wherein the furniture fitting (2) can be disposed on a first furniture element (3) of the two furniture elements (3, 4), and is provided to drive the second furniture element (4) by means of the motor (10), so as to generate motorassisted movement of the second furniture element (4) versus the first furniture element (3) between at least two positions (5, 6), at least in sections,
wherein a first position (5) of the two positions (5, 6) is a farther closed position, in which the second furniture element (4) separates a storage space (7) more strictly than in the second position (6), which is a farther opened position, wherein the motor (10) is configured substantially disk-shaped, and is configured as an electric, brushless motor with a rotor (13) with magnetic elements (14), and a stator (11) with current-conductible coils (12) is disposed in the rotor (13), and a rotational axis (35) of the rotor (13) extends through the stator (11), and that the rotary motion of the motor (10) is converted to movement between the two positions (5, 6),
and wherein at least three phases are disposed on the stator (11),
**characterized in that** at least one sensor (33) is comprised to capture or estimate at least one position of the second furniture element (4), and that the sensor (33) is coupled with a control (34), and wherein the control (34) and the sensor (33) is configured and set up to avoid experimental starting of the motor (10) in both directions to find out the position of the motor (10), and the correct current feed to the coils (12) dependent thereon.

2. The furniture component (1) according to the preceding claim, wherein the first furniture element (3) is configured as a wall.

3. The furniture component (1) according to the preceding claim, wherein the wall has a wall thickness (3c) that is greater than the axial width (32) of the motor (10).

4. The furniture component (1) according to claim 2, wherein the wall has large-area side faces (3f) and narrow-area end faces (3g), and the rotational axis (35) is disposed transverse to one of the side faces (3f).

5. The furniture component (1) according to any of the preceding claims, wherein the second furniture element (4) is configured as a flap, lid, door, or drawer.

6. The furniture component (1) according to any of the preceding claims, wherein the furniture fitting (2) comprises a transmission (20), and wherein the rotor (13) acts on a transmission part (21) of the gear transmission (20) of the furniture fitting (2), converting the rotary motion of the motor (10) to movement between the two positions (5, 6),
and/or wherein at least five coils (12) are disposed on the stator (11),
and/or wherein the maximum distance (14a) between two opposite magnetic elements (14) is larger than is the width (14b) of a magnetic element (14) in the direction of the rotational axis (35) .

7. The furniture component (1) according to any of the preceding claims, wherein the sensor (33) is configured as a digital and/or analog sensor.

8. The furniture component (1) according to the preceding claim, wherein at least one end position sensor is comprised, and/or wherein at least one sensor (33) is integrated in the motor (10) .

9. The furniture component (1) according to any of the preceding claims, wherein in a complete opening and closing movement of the second furniture element (4), the furniture fitting (2) is coupled with this furniture element (4) during part of, or the entire, movement.

10. The furniture component (1) according to any of the preceding claims, wherein the first furniture element (3) envelops the furniture fitting (2) on at least four or five sides, and wherein the first furniture element (3) partially envelops the furniture fitting (2) in particular on a further side.

11. The furniture component (1) according to any of the preceding claims, wherein at least the electrically driven part of the furniture fitting (2) is protected by a housing (8) of metal or flame-retardant, and/or wherein the motor (10) is operated at DC voltage, and wherein the DC voltage is in particular less than or equal to 120 V, or less than or equal to 75 V, or less than or equal to 60 V, and/or wherein an energy storage device (37) and/or a wire-bound or wireless data interface is comprised.

12. The furniture component (1) according to any of the preceding claims, wherein the wall (2) comprises at least one core (3a) on which a receiving space (3d) is configured, and wherein at least one core (3a) is connected with the furniture fitting (10), or wherein the wall (3) comprises at least two cores (3a, 3b) and a receiving space (3d), and wherein at least two cores (3a, 3b) are interconnected, and the furniture fitting (2) is accommodated in the receiving space (3d).

13. The furniture component (1) according to any of the preceding claims, comprising at least two motors synchronised with one another.

## Revendications

1. Composant de meuble (1) avec une ferrure de meuble entraînable (2) pour la liaison mobile de deux parties de meuble (3, 4) et avec un moteur électrique (10), dans lequel la ferrure de meuble (2) peut être disposée sur une première partie de meuble ( 3) des deux parties de meuble (3, 4) et est prévue pour entraîner la deuxième partie de meuble (4) au moyen du moteur (10) afin de générer un mouvement assisté par moteur de la deuxième partie de meuble (4) par rapport à la première partie de meuble (3), au moins par sections entre au moins deux positions (5, 6),
dans lequel une première position (5) parmi les deux positions (5, 6) est une position plus fermée dans laquelle la deuxième partie de meuble (4) sépare davantage un espace de rangement (7) que dans la deuxième position (6) qui est une position plus ouverte,
dans lequel le moteur (10) présente une configuration sensiblement en forme de disque et est conçu en tant que moteur électrique sans balais ayant un rotor (13) avec des éléments magnétiques (14) et un stator (11) disposé dans le rotor (13) et comprenant des bobines (12) aptes à être alimentées en courant, et qu'un axe de rotation (35) du rotor (13) traverse le stator (11), et que le mouvement de rotation du moteur (10) est converti en un mouvement entre les deux positions (5, 6),
et dans lequel au moins trois phases sont disposées sur le stator (11),
**caractérisé en ce qu'**au moins un capteur (33) est compris qui est destiné à détecter ou à estimer au moins une position de la deuxième partie de meuble (4),
et **en ce que** le capteur (33) est couplé à une commande (34) et dans lequel la commande (34) et le capteur (33) sont conçus et configurés pour éviter un démarrage test du moteur (10) dans les deux sens afin de connaître la position du moteur (10) et, en fonction de celle-ci, la bonne alimentation en courant des bobines (12).

2. Composant de meuble (1) selon la revendication précédente, dans lequel la première partie de meuble (3) est réalisée sous forme de paroi.

3. Composant de meuble (1) selon la revendication précédente, dans lequel la paroi présente une épaisseur de paroi (3c) supérieure à une largeur axiale (32) du moteur (10).

4. Composant de meuble (1) selon la revendication 2, dans lequel la paroi présente des faces latérales à grande surface (3f) et des faces frontales à surface étroite (3g), et l'axe de rotation (35) est disposé transversalement à l'une des faces latérales (3f).

5. Composant de meuble (1) selon l'une quelconque des revendications précédentes, dans lequel la deuxième partie de meuble (4) est conçue en tant qu'abattant, couvercle, porte ou tiroir.

6. Composant de meuble (1) selon l'une quelconque des revendications précédentes, dans lequel la ferrure de meuble (2) comprend un engrenage (20) et dans lequel le rotor (13) agit sur une partie d'engrenage (21) de l'engrenage (20) de la ferrure de meuble (2) et convertit le mouvement de rotation du moteur (10) en un mouvement entre les deux positions (5, 6) et/ou dans lequel au moins cinq bobines (12) sont disposées sur le stator (11) et/ou dans lequel une distance maximale (14a) entre deux éléments magnétiques opposés (14) est supérieure à une largeur (14b) d'un élément magnétique (14) dans la direction de l'axe de rotation (35).

7. Composant de meuble (1) selon l'une quelconque des revendications précédentes, dans lequel le capteur (33) est conçu en tant que capteur numérique et/ou analogique.

8. Composant de meuble (1) selon la revendication précédente, dans lequel au moins un capteur de position finale est compris et/ou dans lequel au moins un capteur (33) est intégré au moteur (10).

9. Composant de meuble (1) selon l'une quelconque des revendications précédentes, dans lequel, lors d'un mouvement complet d'ouverture et de fermeture de la deuxième partie de meuble (4), la ferrure de meuble (2) est couplée à cette partie de meuble (4) pendant une partie du mouvement ou pendant tout le mouvement.

10. Composant de meuble (1) selon l'une quelconque des revendications précédentes, dans lequel la première partie de meuble (3) comprend la ferrure de meuble (2) sur au moins quatre ou cinq côtés et dans lequel la première partie de meuble (3) comprend en partie la ferrure de meuble en particulier sur un autre côté.

11. Composant de meuble (1) selon l'une quelconque des revendications précédentes, dans lequel au moins la partie à entraînement électrique de la ferrure de meuble (2) est protégée par un boîtier (8) en métal ou de manière ignifuge,
et/ou dans lequel le moteur (10) fonctionne à tension continue et dans lequel la tension continue est en particulier inférieure ou égale à 120 V ou inférieure ou égale à 75 V ou inférieure ou égale à 60 V,
et/ou dans lequel un dispositif de stockage d'énergie (37) et/ou une interface de données filaire ou sans fil est compris(e).

12. Composant de meuble (1) selon l'une quelconque des revendications précédentes, dans lequel la paroi (2) comprend au moins un noyau (3a) et un espace de réception (3d) formé sur celui-ci et dans lequel au moins un noyau (3a) est relié à la ferrure de meuble (10),
ou dans lequel la paroi (3) comprend au moins deux noyaux (3a, 3b) et un espace de réception (3d), et dans lequel au moins deux noyaux (3a, 3b) sont reliés l'un à l'autre et la ferrure de meuble (2) est logée sur l'espace de réception (3d).

13. Composant de meuble (1) selon l'une quelconque des revendications précédentes, comprenant au moins deux moteurs qui sont synchronisés entre eux.
